# EUROPEAN PATENT SPECIFICATION

(11) **EP 1 347 665 B1**
(45) Date of publication and mention of the grant of the patent: **21.06.2006**
(21) Application number: 03100481.5
(22) Date of filing: 27.02.2003
(51) Int. Cl.: H04Q 7/38

(54) **Processing service request from roaming terminal**
Verarbeitung einer Dienstanfrage eines umherstreifenden Endgeräts
Traitement d'une demande de service d'un terminal itinérant

(30) Priority: 04.03.2002 FI 20020411
(43) Date of publication of application: 24.09.2003
(73) Proprietor: TeliaSonera Finland Oyj, 00510 Helsinki (FI)
(72) Inventor: Laukkanen, Jussi, 00250, Helsinki (FI); Väänänen, Kai, 02940, Espoo (FI); Julkunen, Mika, 01820, Klaukkala (FI); Korhonen, Jouni, 11100, Riihimäki (FI); Tuomela, Frans, 00640, Helsinki (FI)
(74) Representative: Virkkala, Jukka Antero

(56) References cited:
- WO-A-02/13567
- US-A- 5 946 623
- US-B1- 6 324 396
- NAPOLITANO A ET AL: "UMTS all-IP Mobility Management, Call and session control Procedure" [Online] XP002149519 Retrieved from the Internet: <URL: http://195.103.28.224/ricagni/draft-ricagn i-megaco-umts-all-ip-00.pdf> [retrieved on 2000-10-02] * pages 4,6,8-12,17 *

## Description

### BACKGROUND OF THE INVENTION

The invention relates to supporting connection set-up between a terminal and an application server for providing the terminal with a service. A terminal roaming a visited network transmits a service request that at least indirectly indicates a requested server from which the service is requested. However, the terminal is not aware of the identifier or network address of an application server that is able to provide the requested service. Conventional mobility management for the purpose of handling calls is discussed, for example, in A. Napolitano et al.: *"UMTS all-IP mobility management, call and session control procedure"*

The primary application area of the invention is the use of the services of the IMS system. The IMS (Internet Protocol Multimedia Subsystem) is defined in the 3GPP (Third Generation Partnership Project) recommendation 23.228. In this case, the service request may be based on SIP signalling (SIP = Session Initiation Protocol), for example.

In the home network, calls can be placed either using complete numbers (including country codes etc.) or only subscriber data (operator identifier + subscriber part). When calls are placed abroad, the telephone number used is almost unexceptionally the complete number (country code, operator, subscriber part). An object of an IMS call is to support the use of short numbers and/or alphanumeric identifiers (e.g. 'taxi'). The most important drawback in the use of short numbers/alphanumeric identifiers is that the destination address is not necessarily complete. In network visiting, this causes the problem of how to route a service request to said IMS service system of the visited network. In addition, there is uncertainty of whether the subscriber requests the service of the visited network or of the home network. For example, US patent 5 946 623 to Steven Spradlin discloses a technique in which the routing system informs a home service location of a terminal's location.

### BRIEF DESCRIPTION OF THE INVENTION

An object of the invention is to provide a method and equipment for implementing the method so as to solve the above problems. The object of the invention is achieved by a method and a system that are characterized by what is stated in the independent claims. The preferred embodiments are disclosed in the dependent claims.

The invention is based on the idea of adding an identifier identifying the visited network to the service request. The service request is forwarded to the home network of the terminal, and the home network uses the identifier identifying the visited network in the service request to conclude whether the application server is in the home network or in the visited network, and routes the service request to the application server.

The identifier identifying the visited network may be for instance a globally unique cell identifier including a country code MCC (Mobile Country Code) and a network code MNC (Mobile Network Code), and the cell identifier within said network. In most cases the latter is unnecessary, any identifier identifying the network usually being sufficient, whereby only the country code MCC and the network code MNC have to be added to the service request. On the other hand, forwarding the complete cell identifier via the home network to an application server in a visited network may support some location-dependent services, such as directing a call to the taxis in a given area.

The identifier identifying the visited network is added to the service request preferably in the terminal. The terminal may include for instance a software agent for identifying the outgoing message, e.g. SIP INVITE, and for adding the cell identifier to the message.

A problem associated with the use of short numbers and name identifiers is that when the IMS service of a visited network is used, the home network has to be able to convert the short numbers and name identifiers into a network address of the IMS system of the visited network, e.g. an IP address. For routing it is sufficient that the home network is able to route the service request (the SIP message) to the visited network, since the visited network is typically able to forward the message further to the application server providing said service. There are at least two alternative solutions for this. In the home network, a local database may be maintained that includes a conversion table of the networks of all contracting parties of the home network operator. Alternatively, an inquiry may be transmitted from the home network to a global name service DNS (domain name server/service). The presumption in utilizing the DNS is that the DNS supports the functionality of the DDDS (Dynamic Delegation Discovery System). The DDDS functionality enables for instance the conversion of partly hierarchical number series, such as a Cell-ID, into addresses and names known to the IP world. A hybrid of these methods is also feasible. In other words, the aim is to primarily convert a short number or a name identifier into a complete network address based on the database in the home network, but if the network address corresponding to the short number or the name identifier is not found in the database of the home network, an inquiry is transmitted to the global name service.

An advantage of the method and system of the invention is the ability of a subscriber roaming a visited network to use the services of the visited network without knowing the operator identifier of the visited network. The essential feature of the invention is that the subscriber is always registered at the home IMS system S-CSCF, which serves as a service access point (usually the S-CSCF decides to which application server the service request is directed).

Another problem in using short numbers and name identifiers is that the services in the home network and a visited network may have the same identifier, i.e. the service request does not reliably indicate if the subscriber wants to use the services of the home network or the visited network. This problem can be solved by various methods or combinations of methods.

In accordance with an embodiment, the service request is directed to the home network, and the application server therein concludes, based on the type of service, whether the subscriber wants to use the services of the home network or the visited network. The destination address (visited or home network) of a subscription/service may be concluded by: a) the user entering the identifier manually, b) the terminal/USIM inquiring the destination network of the user, c) the home network inquiring the destination network of the service, d) the home network making an independent decision on the destination network of the service. For example, if the requested service is calling a taxi, it is practically certain that the subscriber means services of a visited network.

In contrast, if the requested service is booking a ticket to a movie or a concert, the service type cannot be used to conclude the network whose service is concerned. At least two solutions exist for this. In accordance with an alternative solution, an explicit identifier, independent of the visited network, can be added to the service request, and the identifier indicates if the application server is in the home network or the visited network. For example, a minus sign could indicate services of a visited network and a plus sign a service of the home network. The term 'network-independent identifier' means that the identifier is the same irrespective of the visited network, as opposed to conventional mobile networks, where the subscriber always has to know the network identifier of said network. In accordance with an alternative solution, if the application server indicated by the service request can be in the home network or in the visited network, the home network transmits an inquiry to the terminal for selecting the network. In the inquiry, the subscriber is notified that the service request may be associated with the service of the home network or the visited network, and the subscriber is requested to select the intended service.

In accordance with a particularly advantageous embodiment, the home network uses a combination of all the above-described methods to conclude whether the service request is associated with the service of the home network or the visited network. In other words, if the service request can be associated with the service of the home network or the visited network, and the service request includes an explicit identifier indicating if the service requested is that of the home network or of the visited network, then the selection is made based on this explicit identifier. If the service request does not include such an explicit identifier, then the network is selected based on the type of service requested, should this be possible. If the network cannot be selected based on the type of service requested, the subscriber is transmitted an inquiry regarding the network selection.

### BRIEF DESCRIPTION OF THE FIGURES

In the following, preferred embodiments of the invention will be described in detail with reference to the accompanying drawings, in which
Figure 1 is a general block diagram showing a situation when a mobile station roams a visited network, which is a different network than the home network of the mobile station;
Figure 2 shows a potential chain of events in the situation shown in Figure 1; and
Figure 3 shows a service request to which an identifier identifying the visited network is added.

### DETAILED DESCRIPTION OF THE INVENTION

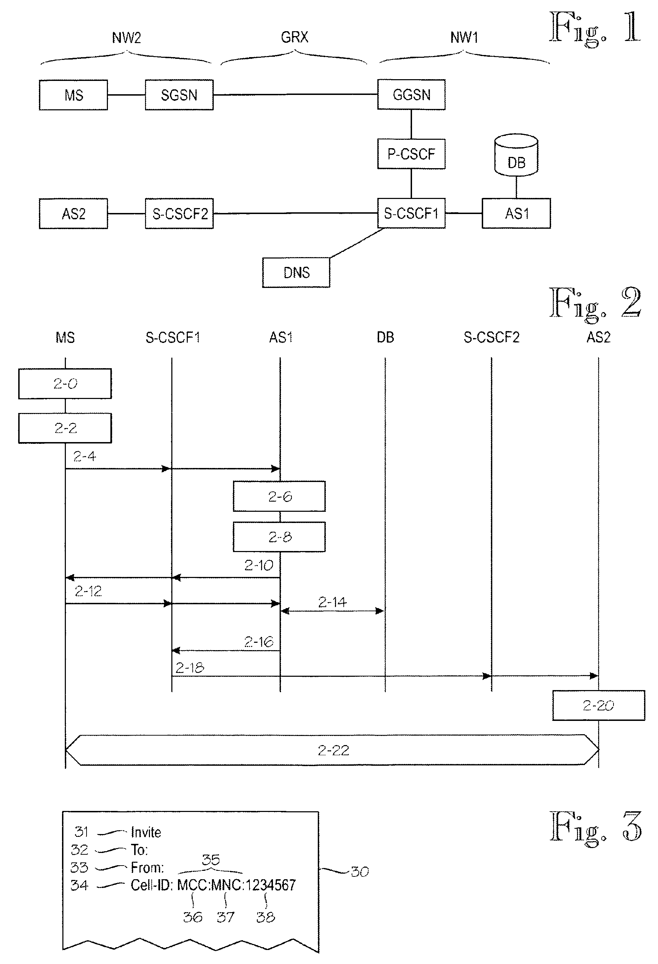

To illustrate, but not to restrict the invention, its operation is described in association with an IMS call. An IMS call can be implemented for instance in a GPRS network (General Packet Radio Service), in which IMS extensions are implemented. Figure 1 shows a situation when a mobile station MS roams a visited network NW2, which is a network different from a home network NW1 of the mobile station. Some network elements, such as the elements constituting the radio path and known to persons skilled in the art are omitted for the sake of simplicity. SGSN (Serving GPRS Support Node) and GGSN (Gateway GPRS Support Node) support the mobility of the terminal. P-CSCF (Proxy Call Session Control Function) and S-CSCF (Service Call Session Control Function) are SIP servers that attend to connection set-up, management and termination at the application layer. AS1 and AS2 are application servers in the home network NW1 of the mobile station and in the visited network NW2, respectively. DB is a database for converting short numbers and name identifier into complete network addresses. DNS is a(n) (area) name service or server. For instance GRX (GPRS Roaming exchange) may serve as the core network, i.e. interconnection network, between mobile operators.

Figure 2 shows a potential chain of events in the situation shown in Figure 1. In step 2-0, the subscriber of the mobile station MS decides to set up a call to the application server AS2 in the visited network by using a short number or the name of the service, e.g. 123 or taxi. These telephone numbers can be converted for instance into the SIP-URL format to be routed in the telephone (it is not essential to the invention whether the short number is converted into the SIP-URL format in the terminal, the P-CSCF or the S-CSCF). Thus the subscriber does not have to know the identifier of the visited network. In step 2-2, the software agent in the mobile station MS detects an outgoing SIP INVITE message and adds a cell identifier to it. In a primary problem situation, the P-CSCF and S-CSCF are located in the home network. Thus all the user's service requests are always forwarded first to the home network. In step 2-4, the home network S-CSCF forwards the service request to the application server AS1. Let us assume that in step 2-6, the home network application server AS1 discovers that the service requested is implemented in the home network (implemented by the AS1 itself or another application server). In step 2-8, the AS1 discovers that the subscriber is in a visited network, and, consequently, the service request may be associated with a service of either the home network or the visited network. The type of service does not indicate which one the subscriber means. In this case, in step 2-10, the AS1 transmits an inquiry about network selection to the subscriber, and the subscriber answers it in step 2-12. Let us assume that the subscriber selects a service of the visited network. In step 2-14, the AS1 transmits an inquiry to the DB (or to the global name service DNS) and obtains from there the network address corresponding to the requested service, i.e. the network address of the IMS system of the visited network NW2. Now, in steps 2-16 and 2-18, the AS1 requests that the S-CSCF1 route the service request to the IMS system of the visited network, which forwards the service request further to the application server AS2. In step 2-20, the AS2 analyzes the service request and provides the requested service in step 2-22.

Figure 3 shows a service request, to which an identifier identifying the visited network is added. In this example, the service request is transmitted as a SIP Invite message 30. The SIP protocol defines a number of text messages including obligatory and optional fields. In this case, field 31 of the message indicates that an Invite message is concerned. Obligatory fields 32 and 33 indicate the recipient and the sender, respectively. In accordance with the invention, an Invite message includes an identifier identifying the visited network. The addition of the identifier is implemented by means of an optional field 34, which in this example includes a globally unique cell identifier, i.e. country code MCC, network code MNC and cell number within said network ('1234567'). However, as was stated above, as far as the invention is concerned, only the addition of the identifier 35 identifying the visited network is necessary, i.e. in this example, the combination of country code (MCC) 36 + network code (MNC) 37. Both the country code and the network code are required, since the same network identities can be used in different countries, and, on the other hand, several different networks can exist in each country. Alternatively, the identifier 35 identifying the visited network may be alphanumeric, e.g. 'sonera.com', in which case one identifier can be globally unique.

It is apparent to a person skilled in the art that as technology advances, the basic idea of the invention can be implemented in a variety of ways. The invention and its embodiments are thus not limited to the above examples, but may vary within the claims.

### Abbreviations:

3GPP = Third Generation Partnership Project
AS = Application Server
DDDS = Dynamic Delegation Discovery System
DNS = Domain Name Server/Service
GGSN = Gateway GPRS Support Node
GPRS = General Packet Radio Service
MCC = Mobile Country Code
MNC = Mobile Network Code
NAPTR = Naming Authority Pointer
IMS = Internet Protocol Multimedia Subsystem
P-CSCF = Proxy Call Session Control Function
S-CSCF = Service Call Session Control Function
SGSN = Serving GPRS Support Node
SIP = Session Initiation Protocol

## Claims

1. A method for supporting connection set-up between a terminal (MS) and an application server (AS1, AS2) for providing the terminal with a service when the terminal is roaming a visited network (NW2), which is a different network than a home network (NW1) of the terminal;
in which method the terminal (MS) transmits a service request (2-4, 30) to the visited network, the service request at least indirectly indicating the type of service, but when transmitting the service request, the terminal is not aware of an identifier or network address of the application server;
the method further comprising:
adding at the terminal an identifier (34, 35) identifying the visited network to the service request (2-4, 30);
forwarding the service request to the home network (NW1) of the terminal; and
the home network concluding an identifier of the application server suitable for providing the service at least partly based on the identifier identifying the visited network and included in the service request, concluding whether the application server is in the home network or in the visited network; and routing the service request to the application server.

2. A method as claimed in claim 1, **characterized by** the identifier (34, 35) identifying the visited network including a country code (36) and a network code (37).

3. A method as claimed in claim 2, **characterized by** the identifier identifying the visited network also including a cell identifier (38).

4. A method as claimed in any one of the preceding claims, char- acterized by adding, to the service request, an explicit identifier independent of the visited network for indicating if the application server suitable for providing the service is in the home network or in the visited network.

5. A method as claimed in any one of the preceding claims, char- acterized in that if the application server suitable for providing the service can be in the home network or in the visited network, the home network concludes the network based on the type of service.

6. A method as claimed in any one of the preceding claims, c h a r-acterized in that if the application server suitable for providing the service can be in the home network or in the visited network, the home network transmits an inquiry (2-10, 2-12) to the terminal for network selection.

7. A method as claimed in any one of the preceding claims, **characterized by** the home network routing the service request to the application server based on a local database (DB) in the home network.

8. A method as claimed in any one of the preceding claims, **characterized by** the home network routing the service request to the application server based on a global name service (DNS).

9. A method as claimed in any one of the preceding claims, **characterized by** the service request being a SIP message (30) according to the Internet Protocol Multimedia Subsystem [IMS] system.

10. A terminal (MS) arranged to roam a visited network (NW2) and transmit a service request (2-4, 30) that at least indirectly indicates an application server (AS1, AS2)**characterized in that** when the terminal is unaware of the identifier or network address of the application server, the terminal is arranged to add an identifier (34, 35) of the visited network to the service request for forwarding it to the terminal's home network in order to conclude, based on the identifier, whether the application server is in the home network or in the visited network, and to route the service request to the application server (AS1, AS2).

11. An arrangement for supporting connection set-up between a terminal (MS) and an application server (AS1, AS2) for providing the terminal with a service when the terminal is roaming a visited network (NW2), which is a different network than a home network (NW1) of the terminal and when the terminal is unaware of the identifier or network address of the application server,
the arrangement comprising:
means for receiving a service request (2-4, 30) from the visited network, the service request at least indirectly indicating the type of service;
means for identifying an identifier (34, 35) identifying the visited network and added to the service request (2-4, 30) by the terminal;
means for concluding, based on the identifier identifying the visited network and added to the service request, if the application server is in the home network or in the visited network; and
means for routing the service request to the application server.

## Patentansprüche

1. Verfahren zum Unterstützen eines Verbindungsaufbaus zwischen einem Endgerät (MS) und einem Anwendungs-Server (AS1, AS2) zum Liefern einer Diensts zu dem Endgerät, wenn das Endgerät in einem besuchten Netz (NW2) Roaming durchführt, welches ein unterschiedliches Netz zu einem Heimnetz (NW1) des Endgeräts ist;
wobei in diesem Verfahren das Endgerät (MS) eine Dienstanforderung (2-4, 30) zu dem besuchten Netz sendet, wobei die Dienstanforderung mindestens indirekt den Diensttyp anzeigt, aber, wenn die Dienstanforderung gesendet wird, das Endgerät nicht über eine Kennung oder Netzadresse des Anwendungs-Servers unterrichtet ist;
wobei das Verfahren weiterhin aufweist:
Hinzufügen einer Kennung, die das besuchte Netz identifiziert, zu der Dienstanforderung /2-4, 30) an dem Endgerät;
Weiterleiten der Dienstanforderung zu dem Heimnetz (NW1) des Endgeräts; und
wobei das Heimnetz eine Kennung des Anwendungs-Servers, der zum Liefern des Diensts geeignet ist, mindestens teilweise auf der Grundlage der Kennung, die das besuchte Netz identifiziert und in der Dienstanforderung enthalten ist, folgert, ob der Anwendungs-Server in dem Heimnetz oder in dem besuchten Netz ist, und die Dienstanforderung zu dem Anwendungs-Server leitet.

2. Verfahren nach Anspruch 1, **gekennzeichnet durch** die das besuchte Netz indentifizierende Kennung (34, 35), die einen Ländercode (35) und einen Netzcode (37) beinhaltet.

3. Verfahren nach Anspruch 2, **gekennzeichnet durch** die das besuchte Netz identifizierende Kennung, die ebenso eine Zellkennung (38) beinhaltet.

4. Verfahren nach einem der vorhergehenden Ansprüche **gekennzeichnet durch** Hinzufügen einer expliziten Kennung, die von dem besuchten Netz unabhängig ist, zum Anzeigen, ob der Anwendungs-Server zum Liefern des Diensts in das Heimnetz oder in das besuchte Netz geeignet ist, zu der Dienstanforderung.

5. Verfahren nach einem der vorhergehenden Ansprüche, **dadurch gekennzeichnet, dass** das Heimnetz das Netz auf der Grundlage des Diensttyps folgert, wenn der Anwendungs-Server zum Liefern des Diensts in dem Heimnetz oder in dem besuchten Netz sein kann.

6. Verfahren nach einem der vorhergehenden Ansprüche, **dadurch gekennzeichnet, dass** das Heimnetz eine Anfrage (2-10, 2-12) zu dem Endgerät für eine Netzauswahl sendet, wenn der Anwendungs-Server zum Liefern des Diensts in dem Heimnetz oder in dem besuchten Netz sein kann.

7. Verfahren nach einem der vorhergehenden Ansprüche, **gekennzeichnet, durch** das Heimnetz, das die Dienstanforderung auf der Grundlage einer lokalen Datenbank (DB) in dem Heimnetz zu dem Anwendungs-Server leitet.

8. Verfahren nach einem der vorhergehenden Ansprüche, **gekennzeichnet durch** das Heimnetz, das die Dienstanforderung auf der Grundlage eines globalen Namensdiensts (DNS) zu dem Anwendungs-Server leitet.

9. Verfahren nach einem der vorhergehenden Ansprüche, **gekennzeichnet durch** die Dienstanweisung, die gemäß dem Internet-Protocol-Multimedia-Subsystem-[IMS]-System eine SIP-Nachricht (30) ist.

10. Endgerät (MS), das angeordnet ist, um in einem besuchten Netz (NW2) Roaming durchzuführen und eine Dienstanforderung (2-4, 30) zu senden, die mindestens teilweise einen Anwendungs-Server (AS1, AS2) anzeigt, **dadurch gekennzeichnet, dass** das Endgerät, wenn das Endgerät nicht über die Kennung oder die Netzadresse des Anwendungs-Servers unterrichtet ist, angeordnet ist, um eine Kennung (34, 35) des besuchten Netzes zu der Dienstanforderung zum Weiterleiten von dieser zu dem Heimnetz des Endgeräts hinzuzufügen, um auf der Grundlage der Kennung zu folgern, ob der Anwendungs-Server in dem Heimnetz oder in dem besuchten Netz ist, und um die Dienstanforderung zu dem Anwendungs-Server (AS1, AS2) zu leiten.

11. Anordnung zum Unterstützen eines Verbindungsaufbaus zwischen einem Endgerät und einem Anwendungs-Server (AS1, AS2) zum Liefern eines Diensts zu dem Endgerät, wenn das Endgerät in einem besuchten Netz (NW2) Roaming durchführt, welches ein unterschiedliches Netz zu einem Heimnetz (NW1) des Endgeräts ist, und wenn das Endgerät nicht über die Kennung oder Netzadresse des Anwendungs-Servers unterrichtet ist,
wobei die Anordnung aufweist:
eine Einrichtung zum Empfangen einer Dienstanforderung (2-4, 30) von dem besuchten Netz, wobei die Dienstanforderung mindestens indirekt den Diensttyp anzeigt;
eine Einrichtung zum Identifizieren einer Kennung (34, 35), die das besuchte Netz identifiziert und durch das Endgerät zu der Dienstanforderung hinzugefügt (34, 35) wird;
eine Einrichtung zum Folgern auf der Grundlage der Kennung, die das besuchte Netz identifiziert und zu der Dienstanforderung hinzugefügt ist, ob der Anwendungs-Server in dem Heimnetz oder in dem besuchten Netz ist; und
eine Einrichtung zum Leiten der Dienstanforderung zu dem Anwendungs-Server.

## Revendications

1. Procédé destiné à supporter l'établissement d'une connexion entre un terminal (MS) et un serveur d'application (AS1, AS2) afin de fournir un service au terminal lorsque le terminal est sur un réseau visité (NW2), qui est un réseau différent d'un réseau domestique (NW1) du terminal ;
dans lequel le terminal (MS) transmet une demande de service (2-4, 30) au réseau visité, la demande de service indiquant au moins indirectement le type de service, mais, lors de la transmission de la demande de service, le terminal ne connaît pas un identifiant ou une adresse réseau du serveur d'application ;
le procédé comprenant en outre des étapes consistant à :
ajouter, au niveau du terminal, d'un identifiant (34, 35) identifiant le réseau visité par rapport à la demande de service (2-4, 30) ;
transférer la demande de service au réseau domestique (NW1) du terminal ; et
le réseau domestique comprenant un identifiant du serveur d'application convenant pour fournir le service au moins partiellement sur la base de l'identifiant identifiant le réseau visité et inclus dans la demande de service, et déduisant si le serveur d'application se trouve sur le réseau domestique ou sur le réseau visité ; et acheminer la demande de service jusqu'au serveur d'application.

2. Procédé selon la revendication 1, **caractérisé par** l'identifiant (34, 35) identifiant le réseau visité, comprenant un code de pays (36) et un code de réseau (37).

3. Procédé selon la revendication 2, **caractérisée par** l'identifiant identifiant le réseau visité comprenant en outre un identifiant de cellule (38).

4. Procédé selon l'une quelconque des revendications précédentes, **caractérisé par** l'ajout, à la demande de service, d'un identifiant explicite indépendant du réseau visité afin d'indiquer si le serveur d'application convenant pour fournir le service se trouve sur le réseau domestique ou sur le réseau visité.

5. Procédé selon l'une quelconque des revendications précédentes, **caractérisé en ce que**, si le serveur d'application convenant pour fournir le service peut se trouver sur le réseau domestique ou sur le réseau visité, le réseau domestique déduit le réseau sur la base du type de service.

6. Procédé selon l'une quelconque des revendications précédentes, **caractérisé en ce que**, si le serveur d'application convenant pour fournir le service peut se trouver sur le réseau domestique ou sur le réseau visité, le réseau domestique transmet une requête (2-10, 2-12) au terminal en vue de la sélection du réseau.

7. Procédé selon l'une quelconque des revendications précédentes, **caractérisé par** le réseau domestique acheminant la demande de service vers le serveur d'application, sur la base d'une base de données locale (DB) située sur le réseau domestique.

8. Procédé selon l'une quelconque des revendications précédentes, **caractérisé par** le réseau domestique acheminant la demande de service vers le serveur d'application sur la base d'un service de nom de domaine (DNS).

9. Procédé selon l'une quelconque des revendications précédentes, **caractérisé par** la demande de service étant un message SIP (30) selon le système à sous-système multimédia à protocole Internet [IMS].

10. Terminal (MS) agencé pour fonctionner sur un réseau visité (NW2) et pour transmettre une demande de service (2-4, 30) qui indique au moins indirectement un serveur d'application (As1, AS2), **caractérisé en ce que**, lorsque le terminal ne connaît pas l'identifiant ou l'adresse réseau du serveur d'application, le terminal est agencé afin d'ajouter un identifiant (34, 35) du réseau visité à la demande de service afin de l'envoyer au réseau domestique du terminal de façon à déduire, sur la base de l'identifiant, si le serveur d'application se trouve sur le réseau domestique ou sur le réseau visité, et d'acheminer la demande de service jusqu'au serveur d'application (AS1, AS2).

11. Ensemble destiné à supporter l'établissement d'une connexion entre un terminal (MS) et un serveur d'application (AS1, AS2) afin de fournir un service au terminal lorsque le terminal est sur un réseau visité (NW2), qui est un réseau différent d'un réseau domestique (NW1) du terminal, et lorsque le terminal ne connaît pas l'identifiant ou l'adresse réseau du serveur d'application ;
l'ensemble comprenant :
un moyen pour recevoir une demande de service (2-4, 30) de la part du réseau visité, la demande de service indiquant au moins indirectement le type de service ;
un moyen pour identifier un identifiant (34, 35) identifiant le réseau visité et ajouté à la demande de service (2-4, 30) par le terminal ;
un moyen pour déduire, sur la base de l'identifiant identifiant le réseau visité et ajouté à la demande de service, si le serveur d'application se trouve sur le réseau domestique ou sur le réseau visité ; et
un moyen pour acheminer la demande de service jusqu'au serveur d'application.
